# EUROPEAN PATENT APPLICATION

(11) **EP 4 787 906 A1**
(43) Date of publication of application: **05.08.2026**
(21) Application number: 25155009.1
(22) Date of filing: 30.01.2025
(51) Int. Cl.: H04W 4/08

(54) **METHOD, NETWORK FUNCTION, AND DEVICE FOR MANAGING GROUPS OF DEVICES IN A WIRELESS COMMUNICATIONS SYSTEM**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A method (400) performed by a network function, a method (500) performed by a device (102), a network function, and a device (102), for managing groups of devices in a wireless communications system. The method (400) performed by the network function comprises querying (423), by a Group Device Management Function, GDFM (308), a Unified Data Repository, UDR (328), to create a group identifier and a group Quality of Service, QoS, policy for a group; wherein the group QoS policy is a QoS policy that is applied to all members of the group; receiving at the GDFM (308), from the UDR (328), confirmation of the creation of the group identifier; receiving at the GDFM (308), from the UDR (328), confirmation of the creation of the group QoS policy; and identifying, by the GDFM, at least one device as a member of the group by using the group identifier, in order for a wireless communications system to manage the at least one device in accordance with the group QoS policy. The method (500) performed by the device (102) comprises: requesting (510) an Application Function, AF (304), to provide a list of groups; receiving (513), from the AF (304), information related to the list of groups; providing (514), to the AF (304), a group identifier to request to join a group from the list of groups; and receiving (519), from AF (304), a confirmation that the device (102) has successfully joined the group.

## Description

### FIELD

The present disclosure relates to a method performed by a network function, a method performed by a device, a network function, and a device, for managing groups of devices in a wireless communications system.

### BACKGROUND

In wireless communications systems, the creation of the groups has seen numerous applications, including Technical and Social Media Groups (for example WhatsApp groups, Teams groups, etc.). Such groups have mainly been used for collaboration between individual members, including group text messaging, video sharing, photo sharing, etc. Groups are typically created based on the interests of users or their social collaborations.

For example, a Closed User Group is a supplementary service offered by network operators for 2G and 3G mobile users. It allows the creation of logical groups of users within the operator's network, and it prevents user within the group from contacting others outside the group or being contacted from outside.

A Closed Subscriber Group (CSG) was introduced in the 3GPP Release 8 specifications. A Closed Subscriber Group is a 4G technology that is used to describe a specific group of devices who are permitted access to a Femto Cell. As a CSG-Identifier is broadcast from the Femto Cell in a SIB2 message, only those mobiles who are members of this group will attempt to select the cell.

A Closed Access Group (CAG) was introduced in the 3GPP Release 16 specifications (5G). A CAG is a 5G technology that identifies a group of subscribers who are permitted to access one or more CAG cells associated to the CAG. CAG is used for access control e.g. authorization at cell selection and configured in the subscription as part of the Mobility Restrictions i.e. independent from any Single-Network Slice Selection Assistant Information (S-NSSAI). A CAG can be used in order to prevent a User Equipment (UE) that is not allowed to access a Public Network Integrated - None Public Networks (PNI-NPN), from accessing the PNI-NPN.

Despite these advancements in techno-social media platforms and the enhancements in communications technologies, in certain areas, such as mission critical services as used by, for example, the police, ambulance, or firefighters, there are still limitations on technical means for collaboration between devices.

For example, in a use case involving an ambulance on a critical mission, there may be numerous individual devices and sensors in or connected to the ambulance, each of them being critical for providing a life-saving mission. Some of the devices may critical, and if the service from the network to those devices was lost, the whole joint mission would fail.

There remains scope for providing improvements in the creation and management of groups in wireless communications systems.

### SUMMARY

In an aspect, there is provided a method for managing groups of devices in a wireless communications system, the method comprising: querying, by a Group Device Management Function, GDFM, a Unified Data Repository, UDR, to create a group identifier and a group Quality of Service, QoS, policy for a group; wherein the group QoS policy is a QoS policy that is applied to all members of the group; receiving at the GDFM, from the UDR, confirmation of the creation of the group identifier; receiving at the GDFM, from the UDR, confirmation of the creation of the group QoS policy; and identifying, by the GDFM, at least one device as a member of the group by using the group identifier, in order for the wireless communications system to manage the at least one device in accordance with the group QoS policy.

The method may include applying the group QoS policy to the device that is a member of the group. In other words, the device will be managed by the wireless communications system in accordance with the group QoS policy.

The method may further comprise, before querying the UDR to create the group identifier and the group QoS policy, initiating, by an Application Function, AF, a request to a Network Exposure Function, NEF, for creating the group.

The method may include authorising, by a Network Exposure Function, NEF, the request. The authorisation may be done by the NEF instructing the GDMF to create an Application Programming Interface, API, wherein the API is used by the GDMF to query the UDR.

The request for creating the group may be provided by exposing, by the NEF, at least one Application Programming Interface, API, of the GDFM that includes the request for creating the group.

The request for creating the group may be provided by at least one device, or a mission control application, that is in communication with the AF.

The method may include determining, by the UDR, the group identifier.

The device may be a User Equipment.

The method may include confirming, by the GDMR, the creation of the group. The confirmation by the GDMR may be performed after determining the group identifier.

The method may include requesting, by the UDR, a Policy Control Function, PCF to create the QoS policy for the group.

The method may include determining, by the PCF, the group QoS policy.

The method may include updating, by the PCF, the UDR with the group QoS policy.

The method may include communicating, by the UDR, to the GDFM, confirmation that the QoS policy for the group has been determined.

The method may include communicating, by the GDFM, via the NEF, to the AF, confirmation that the QoS policy for the group has been determined.

Identifying the at least one device as a member of the group by using the group identifier may comprise: receiving, at an AF, a request for at least one device to join the group, wherein the request comprises the group identifier; and instructing, by the GDMF, the UDR to be updated to include an identifier of the at least one device, and to associate the identifier of the at least one device with the group identifier.

A list of groups, wherein each group in the list of groups corresponds to a group having a different group identifier, may be stored in the UDR.

Updating the UDR to include an identifier of the at least one device may comprise including the identifier in data stored in the UDR.

The method may further comprise receiving, at the AF, a request to provide a list of groups.

The method may further comprise providing, by the AF, the list of groups, in response to receiving the request to provide the list of groups.

The group identifier included in the request for at least one device to join the group may be selected from the list of groups.

The list of groups may include only one group.

The method may further comprise providing a confirmation, via the NEF, that the device has joined the group.

The confirmation may be provided to the device that has joined the group. In other words, a list of group members may be stored or updated in the UDR in response to a device joining the group.

The request to provide the list of groups may be based on a geographic location or group identifier.

The request for at least one device to join a group may be sent to the AF from the at least one UE, or a mission control application.

The AF may provide the request for the at least one device to join the group via the NEF.

The request for at least one device to join the group may comprise: a request for a plurality of devices to join the group; and/or identification information of each of the plurality of devices; and/or individual QoS requirements for each of the plurality of devices. The method may further comprise instructing, by the GDMF, the UDR to be updated to include a list of group members. The list of group members may comprise the identification information of each of the plurality of devices. The list of group members may be associated with the group identifier.

Each device of the plurality of devices may have different 5QI level need.

One of the devices from the plurality of devices may be a group leader that is configured to be in communication with a base station of the wireless communications system, and the remaining devices from the plurality of devices may be configured to be in communication with the base station via the group leader. The method may further comprise communicating with the remaining devices from the plurality of devices via the group leader.

The group leader may be configured to be directly in communication with a base station. The remaining devices from the plurality of devices may be configured to be in communication with the base station only via the group leader. In other words, the remaining devices from the plurality of devices may be group followers that are not directly connected to the base station. Communications between the group followers and the base station may be done via the group leader.

The Group QoS policy may define a policy which, when implemented by the wireless communications system, causes the wireless communications system to prioritize resources for members in the group compared to members not in the group. The resources may be resources that are available on the wireless communications system.

The Group QoS policy may override any individual QoS policy of each member of the group.

Identifying the at least one device as a member of the group may further comprise associating, by the UDR, a Subscription Permanent Identifier, SUPI, of the device with the group identifier in the UDR.

In a further aspect, there is provided a method for managing groups of devices in a wireless communications system, the method being performed or performable by a device, the method comprising: requesting an Application Function, AF, to provide a list of groups; receiving, from the AF, information related to the list of groups; providing, to the AF, a group identifier to request to join a group from the list of groups; and receiving, from AF, a confirmation that the device has successfully joined the group.

In a further aspect, there is provided a network function for managing groups of devices in a wireless communications system, the network function being configured to: query a Unified Data Repository, UDR, to create a group identifier and a group Quality of Service, QoS, policy for a group, wherein the group QoS policy is a QoS policy that is applied to all members of the group; receive, from the UDR, confirmation of the creation of the group identifier; receive, from the UDR, confirmation of the creation of the group QoS policy; and identify at least one device as a member of the group by using the group identifier, in order for the wireless communications system to manage the at least one device in accordance with the group QoS policy.

In a further aspect, there is provided a device for wireless communications, the device being configured to: request an Application Function, AF, to provide a list of groups; receive, from the AF, information related to the list of groups; provide, to the AF, a group identifier to request to join a group from the list of groups; and receive, from AF, a confirmation that the device has successfully joined the group.

In a further aspect, there is provided a data processing system configured to perform the method of any of the preceding aspects.

In a further aspect, there is provided a computer program comprising instructions which, when the program is executed by a computer, cause the computer to carry out the method of any of the preceding aspects.

In a further aspect, there is provided a computer-readable data carrier having stored thereon the computer program of the preceding aspect.

In a further aspect, there is provided a data carrier signal carrying the computer program of any preceding aspect.

### BRIEF DESCRIPTION OF THE FIGURES

Aspects of the present disclosure will now be described by way of example with reference to the accompanying figures. In the figures:
Figure 1 is a diagram showing features of a wireless communications system in an embodiment of the invention;
Figure 2 is a diagram showing features of a wireless communications system in an embodiment of the invention;
Figure 3 is a diagram showing a 5G System Architecture in an embodiment of the invention;
Figure 4 is a diagram showing a first method in an embodiment of the invention;
Figure 5 is a diagram showing a second method in an embodiment of the invention;
Figure 6 is a diagram showing features of a wireless communications system in an embodiment of the invention; and
Figure 7 schematically illustrates an example data processing system.

### DETAILED DESCRIPTION

The present invention relates to systems and methods to permit groups of people, their equipment, devices, and vehicles, etc. to build a group, or a temporary group, of devices based on a common mission.

The wireless communications system, for example a mobile network, facilitates the group of devices by creating a group identifier and a corresponding group Quality of Service (QoS) policy. The group QoS policy defines the requirements of the common mission. The network can then respond to requests by the group and provide higher reliability and security levels considering the mission as an end goal. In this manner, the wireless network treats the group of devices as a single entity, based on a common mission.

This disclosure introduces a process for defining a "Group QoS" for network connectivity to the group of devices that constitutes the joint mission. The disclosure lays out the foundation for on-demand grouping of mobile network users (e.g., phones, loT devices, vehicles) each with individual QoS requirements, but also with notation of the joint mission. Being member of the Group QoS enables the devices to be managed by the network in accordance with quality of experience, security and reliability requirements to ensure group collaboration for the overall group mission. The invention tends introduces new network functions within the 5G core architecture to enable these benefits.

The invention discloses a new function in the network core called Group Device Management Function (GDMF). The GDMF controls the service provision and quality assurance to a mission service that consists of the group of devices. In this way, the QoS of each device that belongs to a group is considered as critical to the overall mission. Handling the "Group QoS" is performed in the GDMF, including group creation, network QoS deployment in each device and overall mission service monitoring and assurance.

The invention tends to add the following abilities to the current 5GS: set network polices to a group of devices based on their joint mission purpose; a group-leader can collaborate with network and other member devices (i.e. Hotspot) belonging to the same group, with the purpose to obtain the reliable connectivity for all individual devices that would ensure the overall joint mission performance. Network is aware of this collaboration and will provision the connectivity to the Group Leader of the required Group QoS that is necessary to satisfy the join mission tasks; and ability to override the individual device slicing policy and QoS policy based on the policies defined by the Group ID.

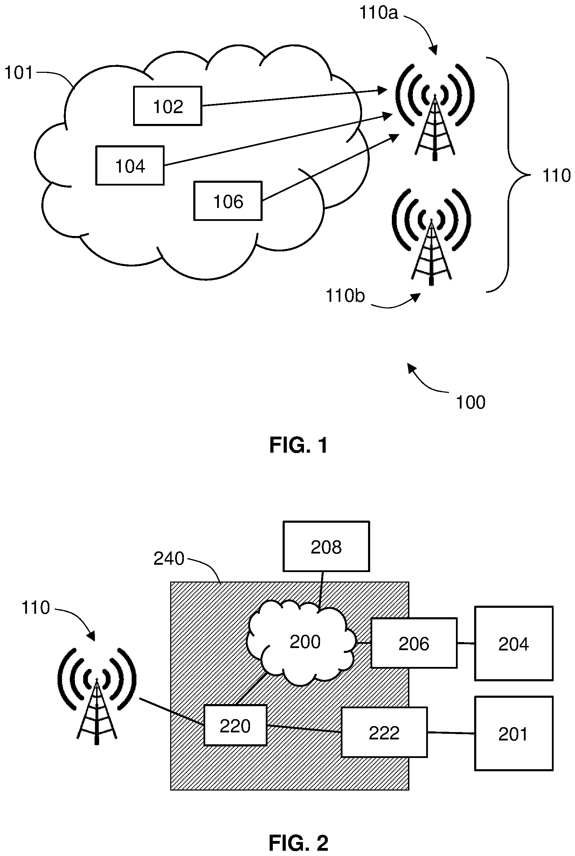

Figure 1 is a diagram showing features of a wireless communications system 100 in an embodiment of the invention. The wireless communications system 100 includes a plurality of base stations 110, and a plurality of devices 102, 104, 106. The plurality of devices 102, 104, 106 are each individually in communication with a first based station 110a.

The group of devices 102, 104, 106 are on a joint mission. For example, the joint mission may be a critical, lifesaving mission performed by an ambulance. The group of devices 102, 104, 106 may each represent a different device within the ambulance, for example, a mobile device that is held by a paramedic in the ambulance, a tablet device that is connected to a mission control centre and communicates patient data to the mission control centre, a medical device located within the ambulance, vehicles, sensors, equipment, or any other type of device that are 5G enabled and may be useful for the purpose of the mission of the ambulance.

For the purpose of illustration, a device 102 represents a command node 102 that is built into the ambulance. A device 104 represent a mobile phone 104 used for telecommunications by a paramedic. A device 106 represents a tablet 106 also used by a paramedic in the ambulance for delivering patient care. The tablet 106 is configured to communicate patient information to a command centre or mission control centre.

The command node 102 may generally have more capable hardware compared to the mobile phone 104 and the tablet 106. For example, the command node 102 may have a transmitter and a receiver that is substantially more powerful than a transmitter or receiver of the mobile phone 104.

In the embodiment of Figure 1, the mission of the ambulance is in an urban area and as such the plurality of base stations 110 are located in a similar geographical area. Between the first base station 110a and a second base station 110b there is sufficient cellular coverage to allow each of the plurality of devices 102, 104, 106 to be individually in communication with at least one of the base stations 110a, 110b.

It is desirable that each of the devices 102, 104, 106 are able to work together for the purpose of the mission of the ambulance. The mission of the ambulance is defined as a joint mission 101, and is shown in Figure 1 as a cloud encapsulating each of the devices 102, 104, 106.

It is desired that each of the devices 102, 104, 106 on the joint mission 101 are managed by the wireless communications system 100 correctly in order to ensure that the joint mission 101 is achieved. If, for example, one of the devices was unable to fulfil its purpose, then the entire mission could fail. Thus, it is of vital importance that the wireless communications system 100 manages each of the devices 102, 104, 106 in a manner that facilitates the joint mission 101.

Figure 2 is a diagram showing features related to a network side of the wireless communications system 100 in an embodiment of the invention.

The cloud 200 shown in Figure 2 represents the 5G core functions. The Network Exposure Function (NEF) 206, a Data Network Name (DNN) 222, and the User Plane Function (UPF) 220 are each configured to communicate with the 5G core functions 200. The Application Function (AF) 204 is configured to communicate with the NEF 206. A mission control centre 201 is configured to communicate with the DNN 222. The UPF 220 is configured to communicate with a base station 110.

The overall 5G core service-based architecture (SBA) specified by 3GPP is represented by box 240.

In accordance with an embodiment of the invention, a Group Device Management Function (GDMF) 208 is configured to communicate with the 5G core functions 200, as will be described in more detail below.

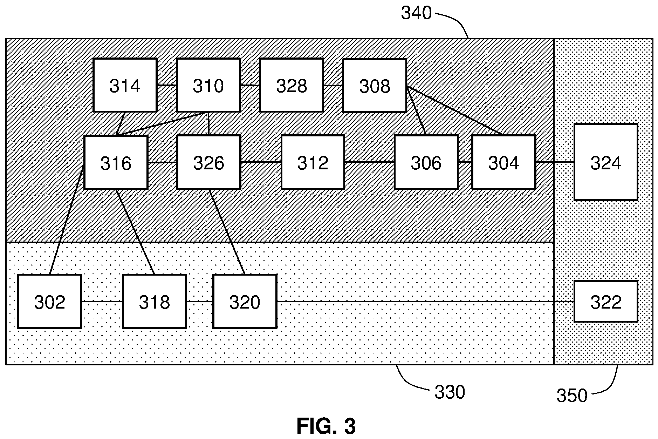

Figure 3 is a diagram showing the 5G Core SBA Architecture in more detail, including the GDMF, in accordance with an embodiment of the invention.

The user plane of the 5G Core SBA Architecture is illustrated in Figure 3 as a first shaded box 330. Included in the user plane 330 is a User Equipment (UE) 302, a Radio Access Network or Access Network (R(AN)) 318, and the User Plane Function (UPF) 320.

The control plane of the 5G Core SBA Architecture is illustrated in Figure 3 as a second shaded box 340. Included in the control plane 340 is the Access and Mobility Function (AMF) 316, Session Management Function (SMF) 326, Policy Control Function (PCF) 312, Network Exposure Function (NEF) 306, Application Function (AF) 304, Authentication Server Function (AUSF) 314, Unified Data Management (UDM) 310, Unified Data Repository (UDR) 328, and a GDMF 308.

An Internet or cloud-based portion is illustrated in Figure 3 as a third shaded box 350. Included in the Internet or cloud-based portion 350 is a data network 322 and a mission control application 324.

Each of the components, functions, or blocks of the 5G Core SBA Architecture, as illustrated in Figure 3 and described above, are configured to communicate with other components, function or blocks of the 5G Core SBA Architecture as follows.

The UE 302 is configured to communicate with the R(AN) 318 and the AMF 316.

The R(AN) 318 is configured to communicate with the UE 302, the AMF 316, and the UPF 320.

The UPF 320 is configured to communicate with the R(AN) 318, the SMF 326 and the Data Network 322.

The Data Network 322 is also configured to communicate with the UPF 320.

The AMF 316 is configured to communicate with the UE 302, the R(AN) 318, the SMF 326, the UDM 310, and the AUSF 314.

The SMF 326 is configured to communicate with the AMF 316, the UPF 320, the UDM 310, and the PCF 312.

The PCF 312 is configured to communicate with the SMF 326 and the NEF 306.

The NEF 306 is configured to communicate with the PCF 312, the AF 304, and the GDMF 308.

The AF 304 is configured to communicate with the NEF 306, the GDMF 308, and the mission control application 324.

The mission control application 324 is configured to communicate with the AF 304.

The AUSF 314 is configured to communicate with the UDM 310 and the AMF 316.

The UDM 110 is configured to communicate with the AUSF 314, the AMF 316, the SMF 326, and the UDR 328.

The UDR 328 is configured to communicate with the UDM 310 and the GDMF 308.

The GDMF 308 is configured to communicate with the UDR 328, the NEF 308, and the AF 304.

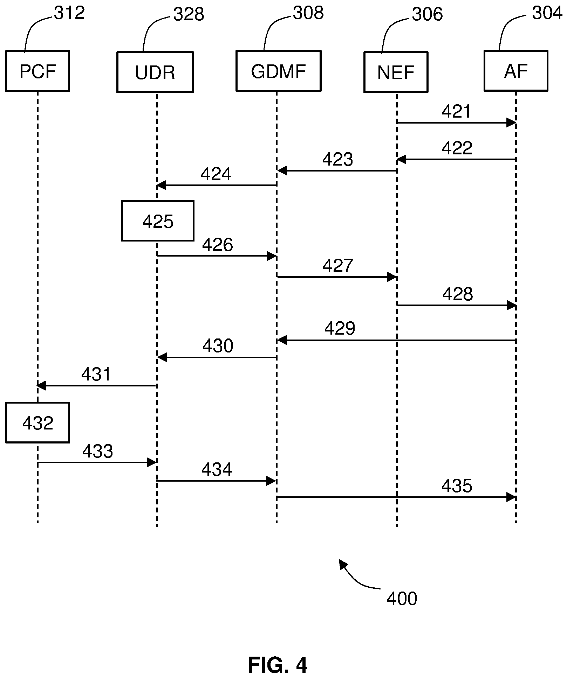

Figure 4 shows a method 400 for managing groups of devices in a wireless communications system. In particular, the method 400 can be used for the creation of a group.

The GDMF 308 includes Application Interfaces (APIs) that are configured for initiating the creation of a group.

In a step 421, GDMF 308 APIs for creating the group are exposed via the NEF 306 to the AF 304.

In a step 422, the AF 304 subscribes to GDMF API exposed by the NEF 306 and initiates a request to the GDMF 308 via the NEF 306 for creating the group.

In a step 423, the NEF 306 authorises the request. After the authorisation, the NEF 306 may instruct the GDMF 308 to create a new group ID as requested by AF. In a step 424, GDMF 308 queries the UDR 328 to create a group identifier and a group Quality of Service (QoS) policy for the group.

In a step 425, the UDR 328 determines the group identifier.

In a step 426, the UDR 328 confirms creation of the group identifier to the GDMF 308.

In a step 427, the GDMF 308 confirms to the NEF 306 the creation of the group.

In a step 428, the NEF 306 passes the confirmation of the creation of the group to the AF 304.

In a step 429, the AF 304 provides the GDMF 308 with a list of devices or at least one device that wants to join the created group via NEF 306. New devices can be added reusing this process. Alternatively, the device can send the request to the AF to join the group via access network Over the Top (OTT), as explained in method 500 further below.

In a step 430, the GDMF 308 updates the UDR 328 with an updated list of the group's members, in order to identify at least one device as a member of the group.

Identifying at least one device as a member of the group may comprise the GDMF 308 instructing the UDR 328 to include an identifier of a device, and to associate the identifier of the device with the group identifier. This may be performed by associating a Subscription Permanent Identifier, SUPI, of the device with the group identifier in the UDR 328.

In a step 431, the UDR 328 requests the PCF 312 to create QoS policy for the (specific) group.

In a step 432, the PCF 312 creates a group QoS policy for the group.

The group QoS policy defines a policy which, when implemented by the wireless communications system, overrides any individual QoS policy of each member of the group.

The group QoS policy can be defined based on the requirements of the joint mission 101. For example, if the joint mission 101 is a critical mission, then the group QoS policy can be defined such that, when the group QoS policy is implemented, the wireless communications system will prioritize resources for members in the group compared to members not in the group. The resources are network resources that are available on the wireless communications system. For example, when the wireless communications system or network becomes aware of UEs or devices belonging to a group, it applies the group QoS policies like boosting gNB RAN capacity, specially treating traffic in the 5G core (lower latency, allocate higher bandwidth) or performing traffic steering toward the optimum edge.

In a step 433, the PCF 312 updates the UDR 328 with the group QoS policy.

In a step 434, the UDR 328 informs the GDMF 308 that the policy creation is complete.

In a step 435, the GDMF 308 informs the AF, via the NEF 306, that the policy creation is complete.

At the end of the method 400 the group has been created and 5GS is configured.

Although in the above-described embodiment the request for creating the group is initiated by the GDMF 308, the disclosure should not be limited thereto. In another embodiment, the request for creating the group is initiated by a UE 302 or a mission control application 324 via the AF 304.

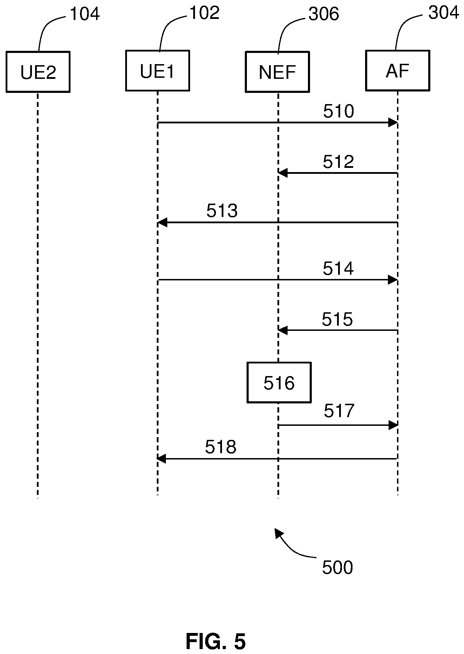

Figure 5 shows a method 500 for managing groups of devices in a wireless communications system. In particular, the method 500 can be used by a UE or device for joining a group.

In a step 510, the UE 102 request the AF 304 (via an Internet connection or any overlay network) to search for a group. The search can be based on the geographic location of the UE 102, or by the UE 102 providing the AF 304 with a group identifier.

A list of groups, wherein each group in the list of groups corresponds to a group having a different group identifier, are stored in the UDR 328. The list of groups may include only one group.

In a step 512, the AF 304 requests the NEF 306 to provide a list of groups, stored in the UDR 328, based on the geographic location or group identifier. The list of groups may only include groups that are available in the UDR 328. An available group may be a group that is able to have new members join the group. The availability of a group may be defined by pre-set criteria.

In a step 513, the AF 304, via overlay connectivity, provides the list of available groups to the UE 102.

In a step 514, the UE 102 requests to join a group by providing, to the AF 304, a group identifier of the selected group from the list of groups.

In a step 515, the AF 304 requests, via the NEF 306, for the UE 102 to join the group.

In a step 516, the network is updated such that the UE 102 is a member of the group. This is implemented by the network performing step 430 as described above in relation to Figure 4.

In a step 517, the network confirms to the AF 304, via the NEF 306, that the UE 102 has successfully joined the group.

In a step 518, the AF 304 confirms to UE 102 that it has successfully joined the group.

In this manner, a UE 102 or device can join a group, and can benefit from the group QoS as discussed above.

Although in the above-described embodiment, the UE 102 has the capability to request to join the group, there may be some instances where a UE, for example, a device / vehicle / sensor, may not have a capability to request to join a group. In such embodiments, the step 510 can be performed by the mission control application 324, via the AF 304, requesting the network for the device to join the group.

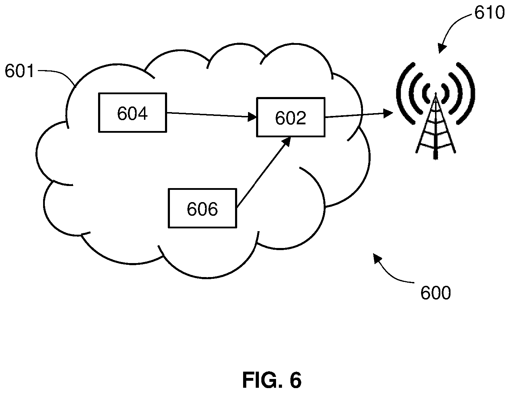

Figure 6 is a diagram showing features of a wireless communications system 600 in a second embodiment of the invention.

Similarly to Figure 1, the embodiment shown in Figure 6 includes a plurality of devices 602, 604, 606, that are on a joint mission 601. However, in the embodiment shown in Figure 6, only one base station 610 is available and providing cellular coverage in the geographical area of the joint mission 101.

In this embodiment, a first device 602 is in communication with the base station 610. However, the second and third devices 604, 606 are not able to be individually in communication with the base station 610. As such, the second and third devices 604, 606 are in communication with the first device 602, which provides a hotspot to provided extended communication of the base station 610.

The embodiment shown in Figure 6 thus represents a scenario in which only one device 602 may be able to communicate with the base station, and the remaining devices 604, 606 are able to communicate with the base station via the first device 602. The first device 602 may be termed as a group leader, and the remaining devices 604, 606 may be termed as group followers.

In this embodiment information needs to be provided to the network of the devices 604, 606 that are connected to the network via the group leader 602 (i.e. Hotspot) and associated with the group identifier. The group leader 602 may comprise, for example, a 5G router capable of providing "last mile" connectivity using various technologies, such as 5G Side-link, WiFi, Bluetooth, etc.

The group leader 602 requests the 5G connectivity mapped with the group identifier 602 5QI QoS flow capacity to the network. Each device of the plurality of devices may have different 5QI level need.

The group leader 602 sends identification information to the GDMF 308 about each individual device 604, 606 that is a member of (i.e., belongs to, or is associated with) the group identifier and are connected to the group leader 602. This can be SIM IMSI, IP Address, or any other label ID.

The GDMF 308 uses this information to start an additional process that can be used to prepare the base station 610 (for example, a macro cell gNBs) that is in close geo-location proximity to the group leader 602 (i.e., the Hotspot), such that the base station 610 is ready to provide the sufficient capacity required for the "Group ID" 5QI QoS flow, for each individual device belonging to that group, in case it requests the handover from the group leader 602 (i.e., the Hotspot) to the macro network.

This may include reserving gNB RAN partition capacity (scheduler), boosting gNB backhaul capacity, etc.

In this manner, the group leader 602 requests for a plurality of devices 604, 606 to join the group; provides identification information of each of the plurality of devices 604, 606; and provides individual QoS requirements for each of the plurality of devices 604, 606.

The UDR 328 updates the list of group members stored in the UDR 328 to include the identification information of each of the plurality of devices 604, 606.

Thus, the call flows for the embodiment of Figure 6 are similar to the ones described in relation to Figures 4 and 5.

In this manner, one of the devices 602, from the plurality of devices 602, 604, 606 is a group leader 602 that is configured to be directly in communication with a base station 610 of the wireless communications system 600. The remaining devices 604, 606 from the plurality of devices 602, 604, 606 are configured to be in communication with the base station 610 only via the group leader 602. The base station 610 communicates with the remaining devices 604, 606 via the group leader 602.

In other words, the remaining devices 604, 606 from the plurality of devices are group followers that are not directly connected to the base station 610. Communications between the group followers and the base station is done via the group leader.

The new invention tends to create a new set of network capabilities. The new capabilities that the invention enables tend to include the ability to identify requirements for provisioning the consistent Quality of Experience among a group of UE individually; the ability to speed up orchestration, configuration and provisioning a comprehensive network capacity, including specific specifications (e.g. latency, bandwidth, traffic path, etc.) that would satisfy requirements of a group of UEs, rather than for each of UE individually.

The simplification of the processes involved in provisioning a consistent and comprehensive QoE to a group of UE that constitutes the use case scenario would increase the effectives of the Telco Operator to provision new services in cheaper and better ways.

Two use cases are provided as an example of how the benefits of the invention may be realised.

Use Case 1 - healthcare use cases related to a Connected Ambulance service, whereby the Ambulance may have a 5G Router with external antenna on the top of the vehicle, acting as a Hotspot (offering 5G Side link, WiFi, Bluetooth, etc.) acting as a Group Leader to a group of the devices that belongs to the same application or mission. The telco network ability to be aware of these devices behind the Hotspot may be used to pre-provision the sufficient bandwidth to the geo-located gNB that are in the close proximity of the Hotspot (Group leader) so that is capable of serving each device individually if required. For example, the Ambulance may arrive to the Hospital for medics to transport the patient from the Ambulance to the Hospital, in which case the Telco network may identify and pre-provision the sufficient capacity in the closest gNB macro cell in preparation for the group-mission devices to start re-connecting from the Hotspot to the macro network or the Wi-Fi network within the Hospital.

Use Case 2 - law enforcement use case, related to a drone connectivity service, whereby a police car may have a 5G Router with external antenna on the top of the vehicle, acting as a Hotspot (offering 5G Side link, Wi-Fi, Bluetooth, etc.) acting as a Group Leader to a group of the devices that belongs to the same application or mission, in this case drones. When the police drone operator lifts a number of drones into the air, these drones may initially be connected to the Hotspot, but at some point they may need to handover connection to the near gNB macro cell. In this case, if the Network is already aware of the geo-location of the Hotspot (Group Leader) and the IDs of each individual device (e.g. Drone SIM card), the network may pre-provision sufficient capacity to the target gNB that may be used to continue the mission critical application.

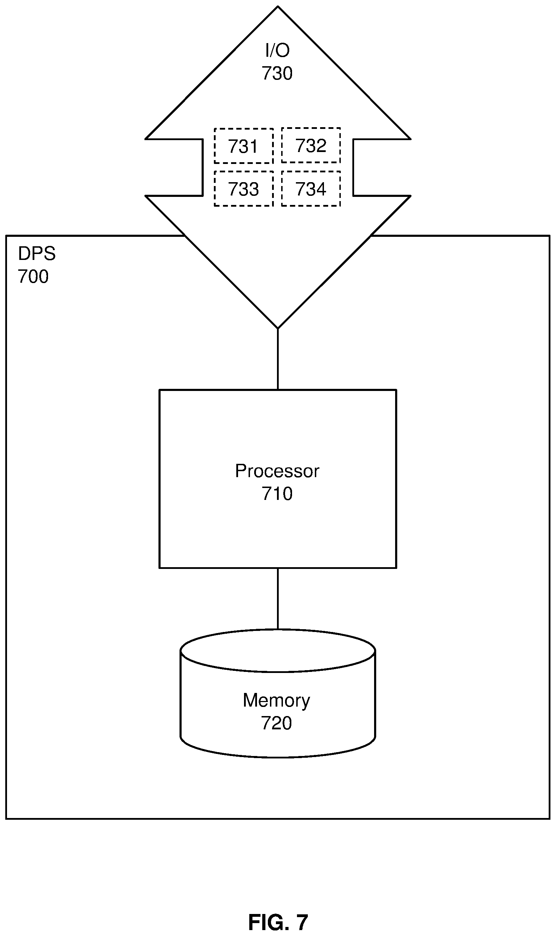

Figure 7 schematically illustrates an example data processing system (DPS) 700 capable of performing any of the methods described above. The DPS 700 comprises a processor 710 operably coupled to both a memory 720 and an interface (I/O) 730.

The memory 720 can optionally comprise computer program instructions which, when executed by the processor 710, cause the data processing system 700 to carry out any of the methods described above.

The interface 730 can optionally comprise one or both of a physical interface 731 configured to receive a data carrier having such instructions stored thereon and a receiver 732 configured to receive a data carrier signal carrying such instructions.

The receiver 732, when present, can be configured to receive messages. It can comprise one or more wireless receiver modules and/or one or more wired receiver modules. The interface 730 can optionally comprise a transmitter 733 configured to transmit messages. The transmitter 733, when present, can comprise one or more wireless transmitter modules and/or one or more wired transmitter modules.

The interface 730 can optionally comprise one or more user interface devices 734.

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

The terms "top", "bottom", "side", "front", "back", "forward", "rear", "clockwise", "anticlockwise" and other terms describing the orientation of features are not intended to be limiting and, where used, are purely included in order to facilitate the description of the relative location of these features in the context of the accompanying drawings. In use, or during storage, the features may be disposed in other orientations.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Resources/computing resources, as referred to herein, comprise time, electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A method for managing groups of devices in a wireless communications system, the method comprising:
querying, by a Group Device Management Function, GDFM, a Unified Data Repository, UDR, to create a group identifier and a group Quality of Service, QoS, policy for a group;
wherein the group QoS policy is a QoS policy that is applied to all members of the group;
receiving at the GDFM, from the UDR, confirmation of the creation of the group identifier;
receiving at the GDFM, from the UDR, confirmation of the creation of the group QoS policy; and
identifying, by the GDFM, at least one device as a member of the group by using the group identifier, in order for the wireless communications system to manage the at least one device in accordance with the group QoS policy.

2. A method according to claim 1, wherein the method further comprises, before querying the UDR to create the group identifier and the group QoS policy:
initiating, by an Application Function, AF, a request to a Network Exposure Function, NEF, for creating the group.

3. A method according to claim 2, wherein the request for creating the group is provided by:
exposing, by the NEF, at least one Application Programming Interface, API, of the GDFM that includes the request for creating the group.

4. A method according to claim 2 or 3, wherein the request for creating the group is provided by at least one device, or a mission control application, that is in communication with the AF.

5. A method according to any preceding claim, wherein to identify the at least one device as a member of the group by using the group identifier, the method comprises:
receiving, at an AF, a request for at least one device to join the group, wherein the request comprises the group identifier; and
instructing, by the GDMF, the UDR to be updated to include an identifier of the at least one device, and to associate the identifier of the at least one device with the group identifier.

6. A method according to claim 5, wherein the request to provide the list of groups is based on a geographic location or group identifier.

7. A method according to claim 5 or 6, wherein
the request for at least one device to join a group is sent to the AF from the at least one UE, or a mission control application.

8. A method according to any one of claims 5 to 7, wherein the request for at least one device to join the group comprises:
a request for a plurality of devices to join the group;
identification information of each of the plurality of devices; and/or individual QoS requirements for each of the plurality of devices;
the method further comprising:
instructing, by the GDMF, the UDR to be updated to include a list of group members;
wherein the list of group members comprises the identification information of each of the plurality of devices; and
wherein the list of group members is associated with the group identifier.

9. A method according to claim 8, wherein one of the devices from the plurality of devices is a group leader that is configured to be in communication with a base station of the wireless communications system, and the remaining devices from the plurality of devices are configured to be in communication with the base station via the group leader; the method further comprising:
communicating with the remaining devices from the plurality of devices via the group leader.

10. A method according to any preceding claim, wherein the Group QoS policy defines a policy which, when implemented by the wireless communications system, causes the wireless communications system to prioritize resources for members in the group compared to members not in the group.

11. A method according to any preceding claim, wherein the Group QoS policy overrides any individual QoS policy of each member of the group.

12. A method according to any preceding claim, wherein identifying the at least one device as a member of the group further comprises associating, by the UDR, a Subscription Permanent Identifier, SUPI, of the device with the group identifier in the UDR.

13. A method for managing groups of devices in a wireless communications system, the method being performed or performable by a device, the method comprising:
requesting an Application Function, AF, to provide a list of groups;
receiving, from the AF, information related to the list of groups;
providing, to the AF, a group identifier to request to join a group from the list of groups; and
receiving, from AF, a confirmation that the device has successfully joined the group.

14. A network function for managing groups of devices in a wireless communications system, the network function being configured to:
query a Unified Data Repository, UDR, to create a group identifier and a group Quality of Service, QoS, policy for a group, wherein the group QoS policy is a QoS policy that is applied to all members of the group;
receive, from the UDR, confirmation of the creation of the group identifier;
receive, from the UDR, confirmation of the creation of the group QoS policy; and
identify at least one device as a member of the group by using the group identifier, in order for the wireless communications system to manage the at least one device in accordance with the group QoS policy.

15. A device for wireless communications, the device being configured to:
request an Application Function, AF, to provide a list of groups;
receive, from the AF, information related to the list of groups;
provide, to the AF, a group identifier to request to join a group from the list of groups; and
receive, from AF, a confirmation that the device has successfully joined the group.
